# EUROPEAN PATENT APPLICATION

(11) **EP 4 822 842 A1**
(43) Date of publication of application: **14.10.2026**
(21) Application number: 24905710.0
(22) Date of filing: 24.09.2024
(51) Int. Cl.: H01M 50/188, H01M 50/186, H01M 50/183, H01M 50/172, H01M 50/147

(54) **BATTERY CASE, BATTERY, BATTERY ASSEMBLY, AND ELECTRIC DEVICE**

(30) Priority: 18.12.2023 CN 202311753561
(71) Applicant: BYD Company Limited, Shenzhen, Guangdong 518118 (CN)
(72) Inventor: XIONG, Min, Shenzhen, Guangdong 518118 (CN); YAN, Yong, Shenzhen, Guangdong 518118 (CN); WANG, Feifei, Shenzhen, Guangdong 518118 (CN); TANG, Daoyi, Shenzhen, Guangdong 518118 (CN); HUANG, Yunsheng, Shenzhen, Guangdong 518118 (CN)
(74) Representative: Taor, Simon Edward William
(86) International application number: PCT/CN2024/120648
(87) International publication number: WO 2025/130219

(57) **Abstract**

A battery case, a battery, a battery assembly, and an electrical device. The battery case includes a shell, two connecting pieces, and two sealing members. The shell is provided with an inner cavity and two through holes in communication with the inner cavity.

## Description

### CROSS-REFERENCE TO RELATED APPLICATIONS

The present disclosure claims priority to Chinese Patent disclosure No. 202311753561.4 filed on December 18, 2023, entitled "BATTERY CASE, BATTERY, BATTERY ASSEMBLY, AND ELECTRIC DEVICE", the entire contents of which are incorporated herein by reference.

### FIELD

The present disclosure relates to the field of batteries, and in particular, to a battery case, a battery including the battery case, a battery assembly including the battery, and an electrical device including the battery assembly.

### BACKGROUND

Batteries can generally be classified into pouch batteries and rigid case batteries. Pouch batteries typically use an aluminum-plastic film to accommodate a battery cell. However, the structural strength of the aluminum-plastic film is relatively weak, and increasing the thickness of the aluminum-plastic film to enhance its strength leads to increased costs of the battery.

For rigid case batteries, a metal case is typically configured to accommodate the battery cell, and a cover plate arranged with conductive posts is configured to achieve electrical connection between the battery cell and the external environment. However, during the actual manufacturing process, it is necessary to ensure sufficiently high assembly precision between the cover plate and the metal case to guarantee the sealing of the battery, which leads to increased costs.

### SUMMARY

In view of the above-mentioned shortcomings of the prior art, an objective of the present disclosure is to provide a battery case with improved sealing performance, a battery including the battery case, a battery assembly including the battery, and an electrical device including the battery assembly. The present disclosure provides the following technical solutions:

In a first aspect, an embodiment of the present disclosure provides a battery case, including a shell, the shell being arranged with an inner cavity and two through holes in communication with the inner cavity; two connecting pieces; and two sealing members; wherein one end of a first connecting piece being located in the inner cavity, and the other end of the first connecting piece passing through a first through hole to extend out of the shell, one end of a second connecting piece being located in the inner cavity, and the other end of the second connecting piece passing through a second through hole to extend out of the shell; the two sealing members being both located outside the shell, each sealing member being respectively sleeved on the outer side of the corresponding connecting piece, an outer edge of each sealing member being further respectively fixed to the shell, and each sealing member being configured to shield a gap between the corresponding connecting piece and the corresponding through hole.

In the battery case of the present disclosure, by arranging two connecting pieces extending out of the shell, and by arranging the sealing members sleeved on the outer edges of the connecting pieces, the sealing members are configured to achieve sealing of the gaps between the through holes and the connecting pieces, thereby improving the sealing performance of the battery case of the present disclosure.

In one embodiment, the shell is convexly arranged with two protruding blocks, the two through holes are respectively arranged on the two protruding blocks, and the sealing member is sleeved on a portion of the connecting piece extending at least 0.05 mm beyond the protruding block.

In one embodiment, the shell includes a shell body and a cover body, the two protruding blocks are both arranged at a connection between the shell body and the cover body, each of the protruding blocks includes a first portion located on the shell body and a second portion located on the cover body, and the sealing member is also configured to shield a gap between the first portion and the second portion.

In one embodiment, the outer edge of the sealing member is sleeved on an outer surface of the protruding block, and a distance between the outer edge of the sealing member and the contour of the outer surface of the protruding block is greater than or equal to 0.05 mm.

In one embodiment, along a length direction of the connecting piece, a length of the through hole is greater than or equal to 0.275 mm .

In one embodiment, the battery case further includes a second sealing member, the second sealing member being at least partially located in the through hole and located between the connecting piece and the through hole.

In one embodiment, the second sealing member fills between the connecting piece and the through hole, and the second sealing member is also configured to seal the gap between the through hole and the connecting piece.

In one embodiment, the second sealing member partially extends out of the shell, and along the length direction of the connecting piece, a length of the second sealing member extending out of the shell is greater than or equal to 0.1 mm.

In one embodiment, the shell is made of a metal material, and the second sealing member has insulating properties.

In one embodiment, the shell further includes a recessed portion, and ends of the two connecting pieces extending out of the shell are at least partially located in the recessed portion.

In one embodiment, the shell body and the cover body are made of a metal material.

In one embodiment, the shell body includes a bottom plate and a side plate, the side plate surrounding an edge of the bottom plate, and an end of the side plate away from the bottom plate is attached to the cover body to cooperatively form the inner cavity.

In one embodiment, the shell body is further arranged with a liquid injection hole, the liquid injection hole communicating with the interior of the shell.

In a second aspect, an embodiment of the present disclosure provides a battery, including a battery cell and the battery case according to the first aspect, the battery cell being accommodated within the inner cavity of the battery case, and the two connecting pieces of the battery case being respectively electrically connected to a positive electrode and a negative electrode of the battery cell.

In one embodiment, the battery case further includes a plurality of fixing members, the fixing members being arranged on an outer edge of the shell.

In a third aspect, an embodiment of the present disclosure provides a battery assembly, including a battery tray and the battery according to the second aspect, the battery being accommodated within the battery tray.

In a fourth aspect, an embodiment of the present disclosure provides an electrical device, including the battery assembly according to the third aspect.

It can be understood that, for the battery, the battery assembly, and the electrical device provided in the second to fourth aspects of the present disclosure, because they adopt the battery case provided in the first aspect of the present disclosure, they all achieve the effects of improved sealing performance and reduced cost.

### BRIEF DESCRIPTION OF THE DRAWINGS

FIG. 1 is a schematic structural diagram of a battery according to an embodiment of the present disclosure;
FIG. 2 is an exploded schematic diagram of a battery according to an embodiment of the present disclosure;
FIG. 3 is a partial structural schematic diagram of a battery according to an embodiment of the present disclosure;
FIG. 4 is a partial cross-sectional schematic diagram of a battery according to an embodiment of the present disclosure;
FIG. 5 is a partial top view schematic diagram of a battery according to an embodiment of the present disclosure;
FIG. 6 is another partial top view schematic diagram of a battery according to an embodiment of the present disclosure;
FIG. 7 is another exploded schematic diagram of a battery according to an embodiment of the present disclosure;
FIG. 8 is another structural schematic diagram of a battery according to an embodiment of the present disclosure;
FIG. 9 is yet another structural schematic diagram of a battery according to an embodiment of the present disclosure;
FIG. 10 is still another structural schematic diagram of a battery according to an embodiment of the present disclosure;
FIG. 11 is a schematic structural diagram of a battery cell according to an embodiment of the present disclosure;
FIG. 12 is another schematic structural diagram of a battery cell according to an embodiment of the present disclosure.

Explanation of reference numerals:
100 - Battery, 10 - Battery case, 20 - Battery cell.
11 - Shell, 111 - Inner cavity, 21 - Electrode assembly, 22 - Electrode, 221 - Positive electrode, 222 - Negative electrode, 112 - Through hole, 1121 - First through hole, 1122 - Second through hole, 12 - Connecting piece, 121 - First connecting piece, 122 - Second connecting piece, 13 - Sealing member, 131 - Positive electrode sealing member, 132 - Negative electrode sealing member, 113 - Protruding block, 1131 - First protruding block, 1132 - Second protruding block, 114 - Shell body, 115 - Cover body, 1141 - First portion, 1151 - Second portion, 14 - Second sealing member, 116 - Recessed portion, 1142 - Bottom plate, 1143 - Side plate, 114a - Extended structure, 15 - Liquid injection hole, 16 - Fixing member, 21a - Positive core, 21b - Negative core, 23 - Insulating film.

### DETAILED DESCRIPTION

To facilitate understanding of the present disclosure, the present disclosure will be described more fully below with reference to the relevant accompanying drawings. Preferred embodiments of the present disclosure are shown in the drawings. However, the present disclosure may be embodied in many different forms and is not limited to the embodiments described herein. Rather, these embodiments are provided to ensure the disclosure of the present disclosure is thorough and complete.

The descriptions of the following embodiments refer to the attached drawings to illustrate specific embodiments in which the present disclosure may be practiced. The numbering of components themselves, such as "first", "second", etc., used herein is only for distinguishing the described objects and does not have any sequential or technical meaning. Furthermore, the terms "connected", "coupled" in the present disclosure, unless otherwise specified, include both direct and indirect connections (couplings). Directional terms mentioned in the present disclosure, for example, "upper", "lower", "front", "rear", "left", "right", "inner", "outer", "side", etc., refer only to the directions in the attached drawings. Therefore, the directional terms are used for better and clearer explanation and understanding of the present disclosure, and are not intended to indicate or imply that the device or element referred to must have a specific orientation, be constructed and operated in a specific orientation, and thus cannot be construed as limiting the present disclosure.

In the description of the present disclosure, it should be noted that, unless otherwise explicitly specified and limited, the terms "installed", "connected", and "coupled" should be understood in a broad sense. For example, it may be a fixed connection, a detachable connection, or an integral connection; it may be a mechanical connection; it may be a direct connection, or an indirect connection through an intermediate medium, or it may be the internal communication of two elements. For those of ordinary skill in the art, the specific meanings of the above terms in the present disclosure may be understood in specific contexts. It should be noted that the terms "first", "second", etc. in the specification and claims of the present disclosure and the above-mentioned drawings are used to distinguish different objects, and are not used to describe a specific order. Furthermore, the terms "include", "may include", "comprise", or "may comprise" used in the present disclosure indicate the presence of disclosed corresponding functions, operations, elements, etc., and do not limit one or more additional functions, operations, elements, etc. Furthermore, the terms "include" or "comprise" indicate the presence of corresponding features, numbers, steps, operations, elements, components or combinations thereof disclosed in the specification, and do not preclude the presence or addition of one or more other features, numbers, steps, operations, elements, components or combinations thereof, and are intended to cover non-exclusive inclusion.

Unless otherwise defined, all technical and scientific terms used herein have the same meaning as commonly understood by one of ordinary skill in the art to which the present disclosure belongs. The terms used in the specification of the present disclosure herein are for the purpose of describing specific embodiments only and are not intended to limit the present disclosure.

The electrical device provided in the present disclosure includes a battery assembly. In an embodiment, the electrical device is a vehicle, the vehicle includes a vehicle body and a battery assembly, and the battery assembly is accommodated within the vehicle body to protect the battery assembly. The battery assembly is configured to provide electrical energy for the vehicle and drive the operation of the vehicle. The battery assembly includes a battery and a battery tray, and a plurality of batteries connected in parallel and/or in series are accommodated within the battery tray to protect the batteries. The plurality of batteries cooperate with each other to convert chemical energy stored in the batteries into electrical energy and transmit it to the interior of the vehicle, thereby achieving the current transmission function of the batteries.

It can be understood that, in other embodiments, the electrical device of the present disclosure may also be others. The present disclosure does not impose particular restrictions on this.

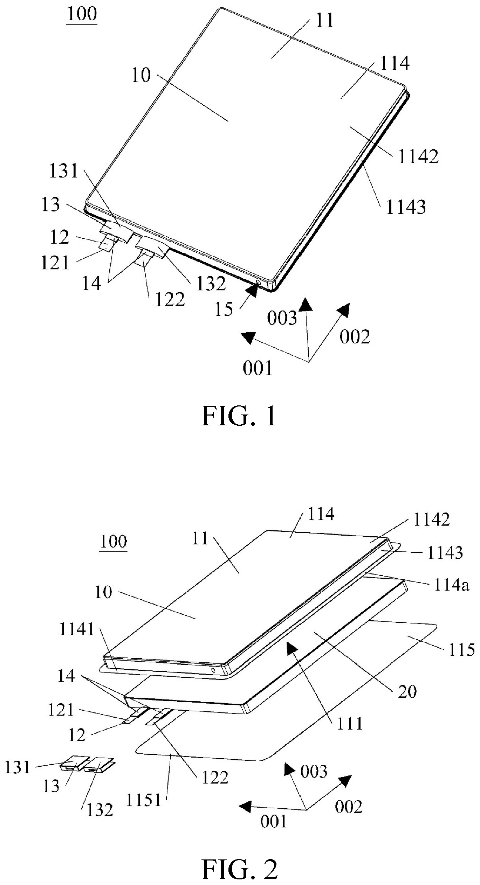

Please refer to FIG. 1, which shows a schematic structural diagram of a battery 100 according to an embodiment of the present disclosure, and please refer to FIG. 2, which shows an exploded schematic diagram of a battery 100 according to an embodiment of the present disclosure. For ease of description, some structures in the battery 100 are omitted in FIG. 2.

As shown in FIG. 1 and FIG. 2, the battery 100 of the present disclosure includes a battery case 10 and a battery cell 20. The battery case 10 includes a shell 11, an inner cavity 111 is arranged in the shell 11, and the battery cell 20 is accommodated within the inner cavity 111. The shell 11 is configured to block external impurities from entering the interior of the shell 11, thereby protecting the battery cell 20. Meanwhile, an electrolyte (not shown in the figures) may also be accommodated within the inner cavity 111 to cooperate with the battery cell 20 to achieve the charge-discharge performance of the battery 100 of the present disclosure.

The battery cell 20 includes an electrode assembly 21 and two electrodes 22. The two electrodes 22 are a positive electrode 221 and a negative electrode 222, respectively, and the positive electrode 221 and the negative electrode 222 are respectively electrically connected to a positive core (not shown in the figures) and a negative core (not shown in the figures) in the electrode assembly 21. It can be understood that the chemical energy stored in the electrolyte can generate electrical energy under the action of the electrode assembly 21. The generated electrical energy can be output outward by the positive electrode 221 and the negative electrode 222, thereby achieving the current output function of the battery 100 of the present disclosure.

Meanwhile, an external current can also be input into the electrode assembly 21 by the positive electrode 221 and the negative electrode 222, and cooperate with the electrolyte to convert electrical energy into chemical energy and store it in the electrolyte, thereby achieving the charging function of the battery 100 of the present disclosure.

For ease of description, in FIG. 1 and subsequent drawings, the planar directions of the shell 11 are respectively set as a first direction 001 and a second direction 002 perpendicular to each other, and a third direction 003 perpendicular to the first direction 001 and the second direction 002 is set.

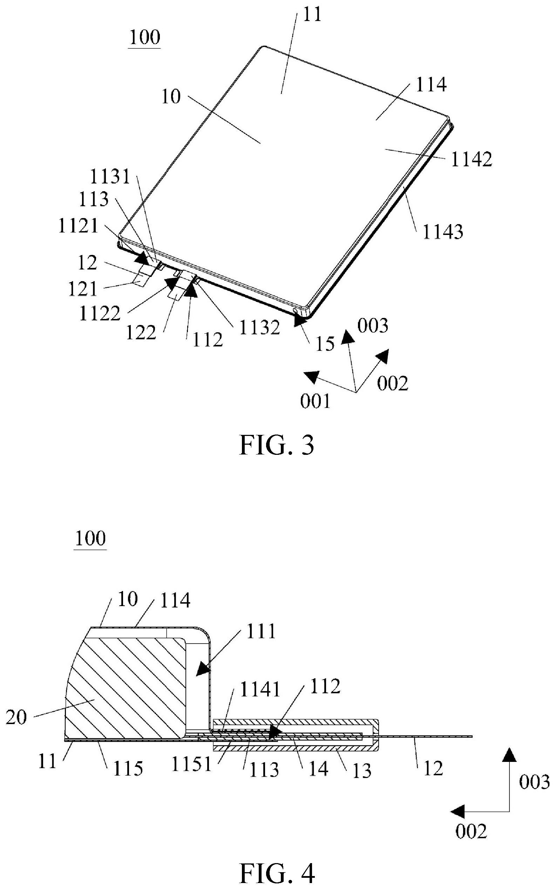

Please refer to FIG. 3, which shows a partial structural schematic diagram of a battery 100 according to an embodiment of the present disclosure, also refer to FIG. 1 and FIG. 2. For ease of description, some structures of the battery case 10 of the present disclosure are omitted in FIG. 3.

As shown in FIG. 1 to FIG. 3, the shell 11 is also arranged with two through holes 112, namely a first through hole 1121 and a second through hole 1122. The first through hole 1121 and the second through hole 1122 both communicate with the inner cavity 111, and the first through hole 1121 and the second through hole 1122 are spaced apart from each other.

The battery case 10 of the present disclosure further includes two connecting pieces 12, namely a first connecting piece 121 and a second connecting piece 122. One end of the first connecting piece 121 is electrically connected to the positive electrode (not shown in the figures) of the battery cell 20, and the other end passes through the first through hole 1121 and extends out of the shell 11; one end of the second connecting piece 122 is electrically connected to the negative electrode (not shown in the figures) of the battery cell 20, and the other end passes through the second through hole 1122 and extends out of the shell 11.

It can be understood that the spacing between the first through hole 1121 and the second through hole 1122 enables the first connecting piece 121 and the second connecting piece 122 to be spaced apart from each other, thereby avoiding a short circuit caused by contact between the first connecting piece 121 and the second connecting piece 122, ensuring the safety of the battery 100 of the present disclosure during use.

An external circuit can be respectively electrically connected to the first connecting piece 121 and the second connecting piece 122 extending out of the shell 11. Specifically, the positive electrode of the external circuit can be electrically connected to the positive electrode (not shown in the figures) of the battery cell 20 by the first connecting piece 121, and the negative electrode of the external circuit can be electrically connected to the negative electrode (not shown in the figures) of the battery cell 20 by the second connecting piece 122, so as to facilitate the charge-discharge function of the battery 100 of the present disclosure.

It can be understood that, in other embodiments, the first connecting piece 121 may also be electrically connected to the negative electrode of the battery cell 20, and correspondingly, the second connecting piece 122 should be electrically connected to the positive electrode of the battery cell 20. Correspondingly, the positive electrode of the external circuit is electrically connected to the second connecting piece 122, and the negative electrode of the external circuit is electrically connected to the first connecting piece 121.

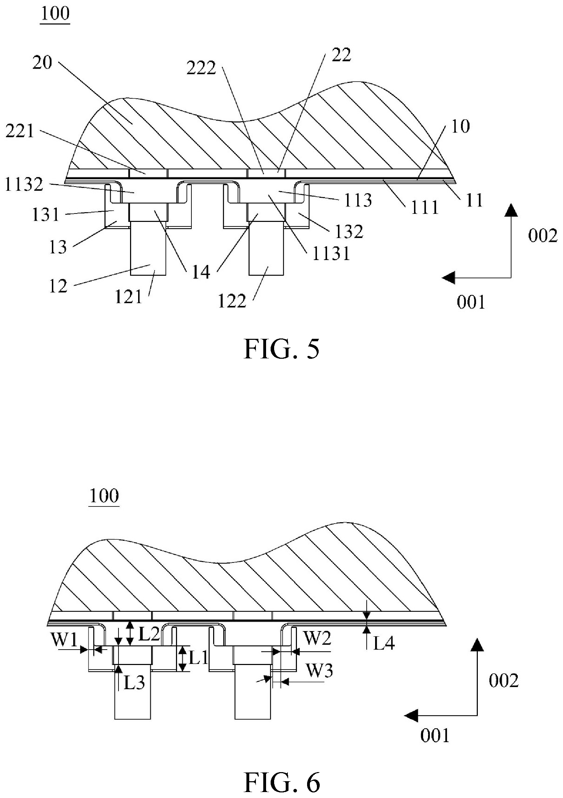

Please refer to FIG. 4, which shows a partial cross-sectional schematic diagram of a battery 100 according to an embodiment of the present disclosure, and please refer to FIG. 5, which shows a partial top view schematic diagram of a battery 100 according to an embodiment of the present disclosure, also refer to FIG. 1 and FIG. 2.

As shown in FIG. 1, FIG. 2, FIG. 4, and FIG. 5, the battery case 10 of the present disclosure further includes two sealing members 13, namely a positive electrode sealing member 131 and a negative electrode sealing member 132. The two sealing members 13 are both located outside the shell 11, and the positive electrode sealing member 131 is sleeved on an outer edge of the first connecting piece 121 and fixed to the shell 11, and the negative electrode sealing member 132 is sleeved on an outer edge of the second connecting piece 122 and fixed to the shell 11.

It can be understood that the provision of the positive electrode sealing member 131 can shield the gap between the first connecting piece 121 and the first through hole 1121, thereby blocking the possibility of external impurities entering the inner cavity 111 by the gap between the first connecting piece 121 and the first through hole 1121, and blocking the possibility of the electrolyte inside the inner cavity 111 flowing out of the inner cavity 111 by the gap between the first connecting piece 121 and the first through hole 1121. This improves the sealing performance of the battery case 10 of the present disclosure and enhances the sealing performance of the battery 100 of the present disclosure.

Meanwhile, the provision of the negative electrode sealing member 132 can shield the gap between the second connecting piece 122 and the second through hole 1122, thereby blocking the possibility of external impurities entering the inner cavity 111 by the gap between the second connecting piece 122 and the second through hole 1122, and blocking the possibility of the electrolyte inside the inner cavity 111 flowing out of the inner cavity 111 by the gap between the second connecting piece 122 and the second through hole 1122. This improves the sealing performance of the battery case 10 of the present disclosure and enhances the sealing performance of the battery 100 of the present disclosure.

Therefore, compared with the method in the prior art for rigid case batteries, which uses a cover plate with conductive posts to achieve electrical connection between the battery cell inside the shell and an external circuit, the battery 100 of the present disclosure, by extending the two connecting pieces 12 electrically connected to the electrodes 22 of the battery cell 20 out of the shell 11, and arranging the sealing members 13 sleeved on the outer edges of the connecting pieces 12, satisfies the current transmission function between the battery 100 of the present disclosure and an external circuit, while utilizing the sealing members 13 to achieve sealing of the gaps between the through holes 112 and the connecting pieces 12, thereby improving the sealing performance of the battery 100 of the present disclosure.

Please refer to FIG. 6, which shows another partial top view schematic diagram of a battery 100 according to an embodiment of the present disclosure, also refer to FIG. 4 and FIG. 5.

In one embodiment, as shown in FIG. 4 to FIG. 6, the shell 11 is convexly arranged with two protruding blocks 113, namely a first protruding block 1131 and a second protruding block 1132. The first through hole 1121 is arranged on the first protruding block 1131, and the second through hole 1122 is arranged on the second protruding block 1132.

The positive electrode sealing member 131 is sleeved on an end of the first connecting piece 121 extending out of the first protruding block 1131, extends towards the first protruding block 1131, and is attached to an end surface of the first protruding block 1131 away from the battery cell 20. As shown in FIG. 6, along the second direction 002, a distance between an end surface of the positive electrode sealing member 131 away from the battery cell 20 and an end surface of the first protruding block 1131 away from the battery cell 20 is a first dimension L1. The first dimension L1 is greater than or equal to 0.05 mm.

During actual use, the battery cell 20 inside the shell 11 generates heat, which causes the air in the inner cavity 111 to expand. It can be understood that when the first dimension L1 is less than 0.05 mm, the positive electrode sealing member 131 is too thin, which may cause the expanded gas in the inner cavity 111 to breach the positive electrode sealing member 131 during normal use of the battery 100 of the present disclosure, leading to electrolyte leakage and affecting the sealing performance of the battery case 10 of the present disclosure and the sealing performance of the battery 100.

Therefore, setting the first dimension L1 of the positive electrode sealing member 131 to be greater than or equal to 0.05 mm can ensure the sealing function of the positive electrode sealing member 131 for the first through hole 1121 during normal use of the battery 100 of the present disclosure. This ensures the effectiveness of the positive electrode sealing member 131 in improving the sealing performance of the battery 100 of the present disclosure.

On the other hand, the negative electrode sealing member 132 is sleeved on an end of the first connecting piece 121 extending out of the second protruding block 1132, extends towards the second protruding block 1132, and is attached to an end surface of the second protruding block 1132 away from the battery cell 20. As shown in FIG. 6, along the second direction 002, a distance between an end surface of the negative electrode sealing member 132 away from the battery cell 20 and an end surface of the second protruding block 1132 away from the battery cell 20 is a first dimension L1. The first dimension L1 is greater than or equal to 0.05 mm.

During actual use, the battery cell 20 inside the shell 11 generates heat, which causes the air in the inner cavity 111 to expand. It can be understood that when the first dimension L1 is less than 0.05 mm, the negative electrode sealing member 132 is too thin, which may cause the expanded gas in the inner cavity 111 to breach the negative electrode sealing member 132 during normal use of the battery 100 of the present disclosure, leading to electrolyte leakage and affecting the sealing performance of the battery case 10 of the present disclosure and the sealing performance of the battery 100.

Therefore, setting the first dimension L1 of the negative electrode sealing member 132 to be greater than or equal to 0.05 mm can ensure the sealing function of the negative electrode sealing member 132 for the second through hole 1122 during normal use of the battery 100 of the present disclosure. This ensures the effectiveness of the negative electrode sealing member 132 in improving the sealing performance of the battery 100 of the present disclosure.

In one embodiment, please refer back to FIG. 2 to FIG. 5, the shell 11 includes a shell body 114 and a cover body 115, and the first protruding block 1131 and the second protruding block 1132 are both arranged at a connection between the shell body 114 and the cover body 115. Each of the protruding blocks 113 includes a first portion 1141 and a second portion 1151. The first portion 1141 is located on the shell body 114, and the second portion 1151 is located on the cover body 115. The first portion 1141 and the second portion 1151 are connected to each other, and a corresponding through hole 112 is formed between the first portion 1141 and the second portion 1151.

For the positive electrode sealing member 131, the positive electrode sealing member 131 also extends along the second direction 002 toward the outer surface of the shell 11, contacts the outer surface of the shell 11, and causes the positive electrode sealing member 131 to be sleeved around the periphery of the first protruding block 1131.

It can be understood that surrounding the positive electrode sealing member 131 around the periphery of the first protruding block 1131 and bringing it into contact with the outer surface of the shell 11 can prevent the electrolyte inside the shell 11 from flowing out by the gap between the first portion 1141 and the second portion 1151 from the first direction 001. This further improves the sealing effect of the positive electrode sealing member 131 on the first protruding block 1131, further improves the sealing performance of the battery case 10 of the present disclosure, and further improves the sealing performance of the battery 100 of the present disclosure.

As shown in FIG. 5 and FIG.6, the outer edge of the positive electrode sealing member 131 is sleeved on an outer surface of the first protruding block 1131, and a distance between the outer edge of the positive electrode sealing member 131 and the contour of the outer surface of the first protruding block 1131 is a first width W1, and the first width W1 is greater than or equal to 0.05 mm.

Since there may be a gap between the first protruding block 1131 and the positive electrode sealing member 131 in the second direction 002, it can be understood that when the first width W1 of the positive electrode sealing member 131 is less than 0.05 mm, during normal operation of the battery 100 of the present disclosure, the expanded gas in the inner cavity 111 may act on the sidewall of the positive electrode sealing member 131 along the gap between the first protruding block 1131 and the positive electrode sealing member 131, thereby breaching the sidewall of the positive electrode sealing member 131, causing leakage of the electrolyte in the inner cavity 111, thus affecting the use safety and sealing performance of the battery 100 of the present disclosure.

For the negative electrode sealing member 132, the negative electrode sealing member 132 also extends along the second direction 002 toward the outer surface of the shell 11, contacts the outer surface of the shell 11, and causes the negative electrode sealing member 132 to be sleeved around the periphery of the second protruding block 1132.

It can be understood that surrounding the negative electrode sealing member 132 around the periphery of the second protruding block 1132 and bringing it into contact with the outer surface of the shell 11 can prevent the electrolyte inside the shell 11 from flowing out by the gap between the first portion 1141 and the second portion 1151 from the first direction 001. This further improves the sealing effect of the negative electrode sealing member 132 on the second protruding block 1132, further improves the sealing performance of the battery case 10 of the present disclosure, and further improves the sealing performance of the battery 100 of the present disclosure.

As shown in FIG. 5 and FIG.6, the outer edge of the negative electrode sealing member 132 is sleeved on the outer surface of the second protruding block 1132, and a distance between the outer edge of the negative electrode sealing member 132 and the contour of the outer surface of the second protruding block 1132 is a first width W1, and the first width W1 is greater than or equal to 0.05 mm.

Since there may be a gap between the second protruding block 1132 and the negative electrode sealing member 132 in the second direction 002, it can be understood that when the first width W1 of the negative electrode sealing member 132 is less than 0.05 mm, during normal operation of the battery 100 of the present disclosure, the expanded gas in the inner cavity 111 may act on the sidewall of the negative electrode sealing member 132 along the gap between the second protruding block 1132 and the negative electrode sealing member 132, thereby breaching the sidewall of the negative electrode sealing member 132, causing leakage of the electrolyte in the inner cavity 111, thus affecting the use safety and sealing performance of the battery 100 of the present disclosure.

In one embodiment, as shown in FIG. 5 and FIG. 6, along the second direction 002, a length of the first through hole 1121 is a second dimension L2. The second dimension L2 of the first through hole 1121 is greater than or equal to 0.275 mm.

It can be understood that when the second dimension L2 of the first through hole 1121 is less than 0.275 mm, the protruding length of the first protruding block 1131 is reduced, resulting in a decrease in the area where the first connecting piece 121 corresponds to the first protruding block 1131, which may cause the first connecting piece 121 to bend along the third direction 003, potentially affecting the positional restriction of the first connecting piece 121. Meanwhile, when the second dimension L2 is too small, the protruding length of the first protruding block 1131 is too short, which is not conducive to the fixing of the positive electrode sealing member 131.

Therefore, setting the second dimension L2 of the first through hole 1121 to be greater than or equal to 0.275 mm can ensure the positional restriction of the first connecting piece 121 while ensuring the protrusion height of the first protruding block 1131, so as to facilitate the fixing of the positive electrode sealing member 131.

On the other hand, along the second direction 002, a length of the second through hole 1122 is a second dimension L2. The second dimension L2 of the second through hole 1122 is greater than or equal to 0.275 mm.

It can be understood that when the second dimension L2 of the second through hole 1122 is less than 0.275 mm, the protruding length of the second protruding block 1132 is reduced, resulting in a decrease in the area where the second connecting piece 122 corresponds to the second protruding block 1132, which may cause the second connecting piece 122 to bend along the third direction 003, potentially affecting the positional restriction of the second connecting piece 122. Meanwhile, when the second dimension L2 is too small, the protruding length of the second protruding block 1132 is too short, which is not conducive to the fixing of the negative electrode sealing member 132.

Therefore, setting the second dimension L2 of the second through hole 1122 to be greater than or equal to 0.275 mm can ensure the positional restriction of the second connecting piece 122 while ensuring the protrusion height of the second protruding block 1132, so as to facilitate the fixing of the negative electrode sealing member 132.

In one embodiment, as shown in FIG. 3 to FIG. 5, the battery case 10 of the present disclosure further includes a second sealing member 14. The second sealing member 14 is located in the first through hole 1121, located between the first connecting piece 121 and the first through hole 1121, and attached to a surface of the first connecting piece 121.

It can be understood that the provision of the second sealing member 14 can also reduce the gap between the first connecting piece 121 and the first through hole 1121, thereby achieving shielding of the first through hole 1121 to reduce the possibility of external impurities entering the interior of the shell 11 by the first through hole 1121. This improves the sealing performance of the battery case 10 of the present disclosure and enhances the sealing performance of the battery 100 of the present disclosure.

In one embodiment, as shown in FIG. 3 to FIG. 5, the second sealing member 14 fills between the first connecting piece 121 and the first through hole 1121, so as to block external impurities from entering the interior of the shell 11 by the first through hole 1121 while blocking the electrolyte inside the shell 11 from flowing out of the shell 11 by the first through hole 1121. Thus, the second sealing member 14 can cooperate with the first connecting piece 121 to achieve sealing of the first through hole 1121. This improves the sealing performance of the battery case 10 of the present disclosure and enhances the sealing performance of the battery 100 of the present disclosure.

In one embodiment, as shown in FIG. 3 to FIG. 5, along the second direction 002, two opposite ends of the second sealing member 14 may also respectively extend into and out of the shell 11, to further improve the sealing effect of the second sealing member 14 on the first through hole 1121, thereby further improving the sealing performance of the battery 100 of the present disclosure.

In one embodiment, as shown in FIG. 5 and FIG. 6, along the second direction 002, a length of the second sealing member 14 extending out of the first through hole 1121 is a third dimension L3, and the third dimension L3 is greater than or equal to 0.1 mm. Since the second sealing member 14 can melt into a fluid at high temperatures, it can be understood that setting the third dimension L3 to be greater than or equal to 0.1 mm can prevent the second sealing member 14 located outside the shell 11 from still being able to achieve the sealing effect for the first through hole 1121 when the portion of the second sealing member 14 close to the battery cell 20 is in a molten state.

In one embodiment, as shown in FIG. 3 to FIG. 5, the second sealing member 14 is also located in the second through hole 1122, located between the second connecting piece 122 and the second through hole 1122, and attached to a surface of the second connecting piece 122.

It can be understood that the provision of the second sealing member 14 can also reduce the gap between the second connecting piece 122 and the second through hole 1122, thereby achieving shielding of the second through hole 1122 to reduce the possibility of external impurities entering the interior of the shell 11 by the second through hole 1122. This improves the sealing performance of the battery case 10 of the present disclosure and enhances the sealing performance of the battery 100 of the present disclosure.

In one embodiment, as shown in FIG. 3 to FIG. 5, the second sealing member 14 also fills between the second connecting piece 122 and the second through hole 1122, so as to block external impurities from entering the interior of the shell 11 by the second through hole 1122 while blocking the electrolyte inside the shell 11 from flowing out of the shell 11 by the second through hole 1122. Thus, the second sealing member 14 can cooperate with the second connecting piece 122 to achieve sealing of the second through hole 1122. This improves the sealing performance of the battery case 10 of the present disclosure and enhances the sealing performance of the battery 100 of the present disclosure.

In one embodiment, as shown in FIG. 3 to FIG. 5, along the second direction 002, two opposite ends of the second sealing member 14 may also respectively extend into and out of the shell 11, to further improve the sealing effect of the second sealing member 14 on the second through hole 1122, thereby further improving the sealing performance of the battery case 10 of the present disclosure and enhancing the sealing performance of the battery 100 of the present disclosure.

In one embodiment, as shown in FIG. 5 and FIG. 6, along the second direction 002, a length of the second sealing member 14 extending out of the second through hole 1122 is a third dimension L3, and the third dimension L3 is greater than or equal to 0.1 mm. Since the second sealing member 14 can melt into a fluid at high temperatures, it can be understood that setting the third dimension L3 to be greater than or equal to 0.1 mm can prevent the second sealing member 14 located outside the shell 11 from still being able to achieve the sealing effect for the second through hole 1122 when the portion of the second sealing member 14 close to the battery cell 20 is in a molten state.

In one embodiment, the shell 11 is made of a metal material, and the second sealing member 14 has insulating properties. In an embodiment, the second sealing member 14 is made of an active material, for example, polypropylene. It can be understood that, in other embodiments, the second sealing member 14 may also be made of a liquid or gel form of adhesive material and prepared by a curing method. The present disclosure does not impose particular restrictions on this.

In one embodiment, the sealing member 13 may also be made of an active material.

In one embodiment, the shell body 114 is made of a metal material. In an embodiment, the shell body 114 is made of materials such as iron alloy, aluminum alloy, etc. It can be understood that, compared with the shell made of an aluminum-plastic film structure used in pouch batteries in the prior art, the battery 100 of the present disclosure uses a metal material to manufacture the shell body 114, which improves the strength of the shell 11, thereby improving the structural strength of the battery case 10 of the present disclosure and improving the structural strength of the battery 100 of the present disclosure.

In one embodiment, a thickness of the shell body 114 is between 20 µm and 500 µm. It can be understood that setting the thickness of the shell body 114 between 20 µm and 500 µm can ensure the strength of the shell body 114 while preventing the shell body 114 from being too thick and occupying too much space for the battery cell 20, thus affecting the electric capacity of the battery 100 of the present disclosure.

In one embodiment, the cover body 115 is made of a metal material. In an embodiment, the cover body 115 is made of materials such as iron alloy, aluminum alloy, etc. It can be understood that, compared with the shell made of an aluminum-plastic film structure used in pouch batteries in the prior art, the battery 100 of the present disclosure uses a metal material to manufacture the cover body 115, which improves the strength of the shell 11, thereby improving the structural strength of the battery 100 of the present disclosure.

In one embodiment, a thickness of the cover body 115 is between 20 µm and 500 µm. It can be understood that setting the thickness of the cover body 115 between 20 µm and 500 µm can ensure the strength of the cover body 115 while preventing the cover body 115 from being too thick and occupying too much space for the battery cell 20, thus affecting the electric capacity of the battery 100 of the present disclosure.

In one embodiment, the shell 11 is made of an insulating material, and correspondingly, the second sealing member 14 may not be made of a material having insulating properties. In another embodiment, when the shell 11 is made of an insulating material, the battery 100 of the present disclosure may not be provided with the second sealing member 14 on the connecting piece 12.

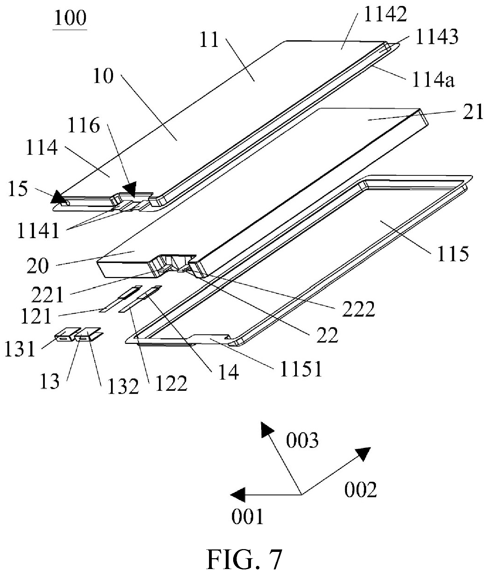

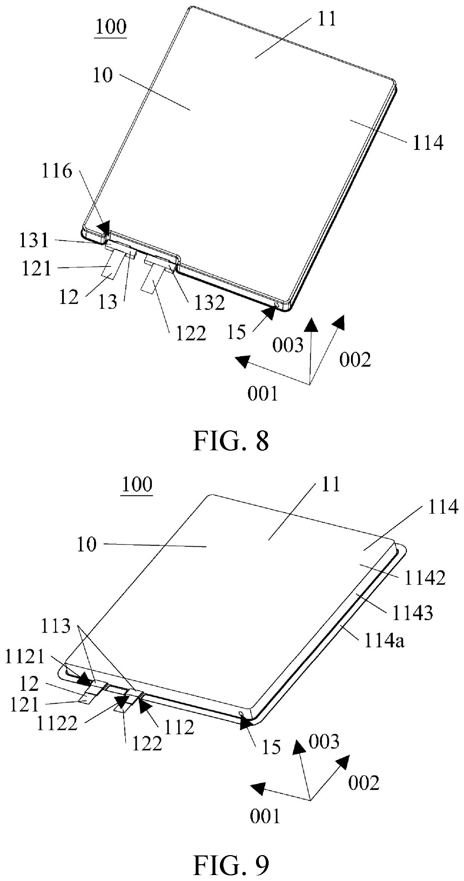

Please refer to FIG. 7, which shows another exploded schematic diagram of a battery 100 according to an embodiment of the present disclosure, and please refer to FIG. 8, which shows another structural schematic diagram of a battery 100 according to an embodiment of the present disclosure.

As shown in FIG. 7 and FIG. 8, the shell 11 is further concavely arranged with a recessed portion 116. The recessed portion 116 extends along the second direction 002 toward the battery cell 20, and the first protruding block 1131 and the second protruding block 1132 are both arranged in the recessed portion 116. It can be understood that the provision of the recessed portion 116 reduces the dimension in the second direction 002 occupied by the provision of the first protruding block 1131 and the second protruding block 1132, thereby increasing the space proportion for the battery cell 20, and thus increasing the electric capacity of the battery 100 of the present disclosure.

In one embodiment, referring back to FIG. 2, the shell body 114 includes a bottom plate 1142 and a side plate 1143. The side plate 1143 surrounds an edge of the bottom plate 1142. An end of the side plate 1143 away from the bottom plate 1142 is attached to the cover body 115 to cooperatively form the inner cavity 111.

Please refer to FIG. 9, which shows yet another structural schematic diagram of a battery 100 according to an embodiment of the present disclosure, also refer to FIG. 2 and FIG. 3.

As shown in FIG. 2, FIG. 3, and FIG. 9, the shell body 114 further includes an extended structure 114a. The extended structure 114a is arranged at an end of the side plate 1143 away from the bottom plate 1142 and extends outward in a direction away from the battery cell 20.

The extended structure 114a and the cover body 115 can cooperate and be fixedly connected, thereby achieving fixed connection between the shell body 114 and the cover body 115. It can be understood that the provision of the extended structure 114a can increase the contact area between the shell body 114 and the cover body 115 while keeping the overall thickness of the shell body 114 and the cover body 115 unchanged, so as to facilitate the connection between the shell body 114 and the cover body 115.

Specifically, in the embodiment, the connection method between the shell body 114 and the cover body 115 may be welding. Along the first direction 001 and the second direction 002, the extended structure 114a and the cover body 115 are welded into one piece. The welded portion does not include the regions where the first through hole 1121 and the second through hole 1122 are arranged.

Therefore, compared with the higher assembly precision requirements between the cover plate and the shell required for rigid case batteries in the prior art, the connection method between the shell body 114 and the cover body 115 arranged in the battery 100 of the present disclosure can reduce precision requirements, thereby lowering the manufacturing cost of the battery 100 of the present disclosure.

Meanwhile, as shown in FIG. 3 and FIG. 9, based on the connection method between the cover body 115 and the shell body 114 of the present disclosure being welding, during actual manufacturing, when the extended structure 114a and the cover body 115 are welded into one piece, the unwelded portion may be cut to reduce the overall size of the battery 100 of the present disclosure. During the cutting process, the regions where the first through hole 1121 and the second through hole 1122 are located are avoided to form the first protruding block 1131 and the second protruding block 1132, respectively.

It can be understood that, in other embodiments, the connection method between the shell body 114 and the cover body 115 in the battery 100 of the present disclosure may also be others, and the present disclosure does not impose particular restrictions on this.

In other embodiments, the cover body 115 may also include a bottom plate and a side plate. The present disclosure does not impose particular restrictions on this.

In one embodiment, referring back to FIG. 5 and FIG. 6. Along the first direction 001, a distance between a sidewall of the protruding block 113 and the welded portion where the first portion 1141 and the second portion 1151 are welded together is a second width W2. The second width W2 is greater than or equal to 0.05 mm. It can be understood that the setting of the second width W2 can prevent damage to the welded portion during the cutting process, thereby ensuring the welding effect between the first portion 1141 and the second portion 1151.

In one embodiment, as shown in FIG. 5 and FIG. 6, along the second direction 002, a distance between an inner wall of the shell 11 and the welded portion where the shell body 114 and the cover body 115 are welded together is a fourth dimension L4. The fourth dimension L4 is greater than or equal to 0.05 mm. It can be understood that the setting of the fourth dimension L4 can prevent damage to the welded portion during the cutting process, thereby ensuring the welding effect between the shell body 114 and the cover body 115.

In one embodiment, as shown in FIG. 5 and FIG. 6, the second sealing member 14 does not completely fill the gap between the through hole 112 and the connecting piece 12, and along the first direction 001, a distance between a sidewall of the second sealing member 14 and the welded portion where the first portion 1141 and the second portion 1151 are welded together is a third width W3. W3 is greater than or equal to 0.1 mm. Based on the fact that welding generates high temperatures and the second sealing member 14 melts in a high-temperature environment, it can be understood that the setting of the third width W3 can ensure the restriction of the relative position of the second sealing member 14.

In one embodiment, as shown in FIG. 9, the shell body 114 is further arranged with a liquid injection hole 15. The liquid injection hole 15 communicates with the interior of the shell 11, so as to facilitate the injection of electrolyte into the interior of the shell 11 through the liquid injection hole 15, thereby improving the efficiency of electrolyte injection.

Therefore, compared with the electrolyte injection method used in pouch batteries, the battery 100 of the present disclosure, by providing the liquid injection hole 15 for electrolyte injection, can reduce the loss of electrolyte during injection, thereby achieving control over the flow rate of the electrolyte within the shell 11.

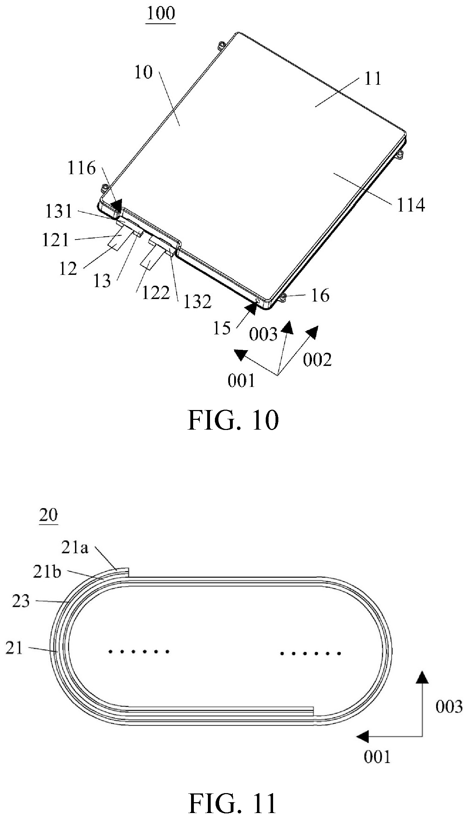

Please refer to FIG. 10, which shows still another structural schematic diagram of a battery 100 according to an embodiment of the present disclosure.

As shown in FIG. 10, the battery case 10 of the present disclosure further includes fixing members 16. A plurality of fixing members 16 are arranged on an outer edge of the shell 11, so as to facilitate fixing the battery 100 within a battery tray.

Please refer to FIG. 11, which shows a schematic structural diagram of a battery cell 20 according to an embodiment of the present disclosure, also refer to FIG. 2 and FIG. 5.

As shown in FIG. 2, FIG. 5, and FIG. 11, the battery cell 20 of the present disclosure includes a plurality of electrode assemblies 21 arranged with tabs (not shown in the figures). The plurality of electrode assemblies 21 include a plurality of positive cores 21a and a plurality of negative cores 21b. Each positive core 21a corresponds to one positive tab (not shown in the figures), and each negative core 21b corresponds to one negative tab (not shown in the figures). The plurality of positive tabs are gathered together and welded into one piece to form the positive electrode 221, and the plurality of negative tabs are gathered together and welded into one piece to form the negative electrode 222. The positive cores 21a and the negative cores 21b are alternately stacked and arranged along the third direction 003.

Since the charge-discharge performance of the battery 100 mainly originates from the mutual conversion between electrical energy and chemical energy, and the mutual conversion between electrical energy and chemical energy is mainly achieved through the positive cores 21a, the negative cores 21b, and the electrolyte (not shown in the figures), when the battery 100 is electrically connected to an external circuit, the positive cores 21a undergo an oxidation reaction with the electrolyte to obtain electrons, while the negative cores 21b undergo a reduction reaction with the electrolyte to lose electrons, thereby generating a potential difference between the positive cores 21a and the negative cores 21b, thus achieving the conversion of chemical energy into electrical energy.

When an external circuit inputs current to the positive cores 21a and the negative cores 21b, due to the potential difference between the positive cores 21a and the negative cores 21b, the positive cores 21a and the negative cores 21b undergo a chemical reaction with the electrolyte, thereby converting electrical energy into chemical energy and storing it in the electrolyte.

To enable the battery 100 to accommodate a larger amount of electricity, it is necessary to increase the contact area between the positive cores 21a, the negative cores 21b, and the electrolyte. By arranging a plurality of positive cores 21a and a plurality of negative cores 21b, and allowing the plurality of positive cores 21a and the plurality of negative cores 21b to be alternately arranged, the battery 100 of the present disclosure can have a larger electric capacity.

Meanwhile, the electrical energy generated by the cooperation of the positive cores 21a and the negative cores 21b can be output to the external circuit by the respective positive tabs and negative tabs, thereby achieving the discharge function of the battery 100 of the present disclosure. On the other hand, the current input from the external circuit can also be transmitted to the battery cell 20 by the respective positive tabs and negative tabs, thereby achieving the charging function of the battery 100 of the present disclosure.

It can be understood that, in the embodiment, as shown in FIG. 11, the plurality of positive cores 21a and the plurality of negative cores 21b are alternately arranged to form the battery cell 20, such that the battery 100 of the present disclosure is a blade battery.

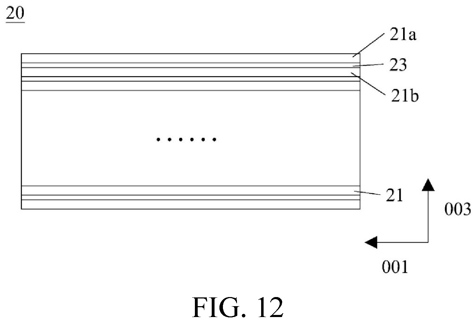

In another embodiment, as shown in FIG. 12, the plurality of positive cores 21a can be connected as one piece, and the plurality of negative cores 21b can also be connected as one piece, such that after the positive cores 21a and the negative cores 21b are attached to each other, they are wound to form the battery cell 20, such that the battery 100 of the present disclosure is a wound core battery.

It can be understood that, in the embodiment, the materials of the positive cores 21a and the negative cores 21b arranged in the battery 100 of the present disclosure are different, to ensure the battery 100 of the present disclosure can achieve its charge-discharge function through the chemical reaction of the materials of the positive cores 21a and the negative cores 21b with the electrolyte. In the embodiment, the battery 100 of the present disclosure is a lithium-ion battery. In another embodiment, the materials of the positive cores 21a and the negative cores 21b arranged in the battery 100 of the present disclosure may also be the same. In the embodiment, the battery 100 of the present disclosure may be a sodium-ion battery.

In one embodiment, as shown in FIG. 11 and FIG. 12, the battery cell 20 further includes a plurality of insulating films 23. The insulating films 23 are arranged between the positive cores 21a and the negative cores 21b and are respectively attached to the positive cores 21a and the negative cores 21b, so as to achieve mutual insulation between the positive cores 21a and the negative cores 21b and prevent short circuits and leakage problems inside the battery cell 20 due to conduction between the positive cores 21a and the negative cores 21b, thereby ensuring the safety of the battery 100 of the present disclosure during use.

It should be understood that the terms "first", "second", etc. are used for descriptive purposes only and cannot be understood as indicating or implying relative importance or implicitly specifying the number of indicated technical features. Therefore, features defined with "first" and "second" may explicitly or implicitly include one or more of said features. In the description of the embodiments of the present disclosure, "plurality" means two or more, unless otherwise explicitly and specifically defined.

In the description of this specification, descriptions referring to the terms "one embodiment", "some embodiments", "exemplary embodiment", "example", "specific example", or "some examples", etc., mean that specific features, structures, materials, or characteristics described in connection with the embodiment or example are included in at least one embodiment or example of the present disclosure. In the present disclosure, schematic representations of the above terms do not necessarily refer to the same embodiment or example. Furthermore, the described specific features, structures, materials, or characteristics may be combined in any suitable manner in any one or more embodiments or examples.

It should be understood that the application of the present disclosure is not limited to the above examples, and those of ordinary skill in the art can make improvements or transformations based on the above description, and all such improvements and transformations should fall within the scope of the appended claims of the present disclosure. A person of ordinary skill in the art can understand that all or part of the processes of the above embodiments can be implemented, and equivalent changes made according to the claims of the present invention still fall within the scope of the present invention.

## Claims

1. A battery case (10), comprising:
a shell (11), the shell (11) being arranged with an inner cavity (111) and two through holes (112) in communication with the inner cavity (111);
two connecting pieces (12); and
two sealing members (13);
one end of a first connecting piece (121) being located in the inner cavity (111), and the other end of the first connecting piece (121) passing through a first through hole (1121) to extend out of the shell (11), one end of a second connecting piece (122) being located in the inner cavity (111), and the other end of the second connecting piece (122) passing through a second through hole (1122) to extend out of the shell (11);
the two sealing members (13) being both located outside the shell (11), each sealing member (13) being respectively sleeved on the outer side of the corresponding connecting piece (12), an outer edge of each sealing member (13) being further respectively fixed to the shell (11), and each sealing member (13) being configured to shield a gap between the corresponding connecting piece (12) and the corresponding through hole (112).

2. The battery case (10) according to claim 1, wherein the shell (11) is convexly arranged with two protruding blocks (113), the two through holes (112) are respectively arranged on the two protruding blocks (113), and the sealing member (13) is sleeved on a portion of the connecting piece (12) extending at least 0.05 mm beyond the protruding block (113).

3. The battery case (10) according to claim 2, wherein the shell (11) comprises a shell body (114) and a cover body (115), the two protruding blocks (113) are both arranged at a connection between the shell body (114) and the cover body (115), each of the protruding blocks (113) comprises a first portion (1141) located on the shell body (114) and a second portion (1151) located on the cover body (115), and the sealing member (13) is also configured to shield a gap between the first portion (1141) and the second portion (1151).

4. The battery case (10) according to claim 2 or 3, wherein the outer edge of the sealing member (13) is sleeved on an outer surface of the protruding block (113), and a distance between the outer edge of the sealing member (13) and the contour of the outer surface of the protruding block (113) is greater than or equal to 0.05 mm.

5. The battery case (10) according to any one of claims 1 to 4, wherein, along a length direction of the connecting piece (12), a length of the through hole (112) is greater than or equal to 0.275 mm.

6. The battery case (10) according to any one of claims 1 to 5, wherein the battery case (10) further comprises a second sealing member (14), the second sealing member (14) being at least partially located in the through hole (112) and located between the connecting piece (12) and the through hole (112).

7. The battery case (10) according to claim 6, wherein the second sealing member (14) fills between the connecting piece (12) and the through hole (112), and the second sealing member (14) is also configured to seal the gap between the through hole (112) and the connecting piece (12).

8. The battery case (10) according to claim 6, wherein the second sealing member (14) partially extends out of the shell (11), and along the length direction of the connecting piece (12), a length of the second sealing member (14) extending out of the shell (11) is greater than or equal to 0.1 mm.

9. The battery case (10) according to claim 6, wherein the shell (11) is made of a metal material, and the second sealing member (14) has insulating properties.

10. The battery case (10) according to any one of claims 1 to 9, wherein the shell (11) further comprises a recessed portion (116), and ends of the two connecting pieces (12) extending out of the shell (11) are at least partially located in the recessed portion (116).

11. The battery case (10) according to any one of claims 3 to 10, wherein the shell body (114) and the cover body (115) are made of a metal material.

12. The battery case (10) according to any one of claims 3 to 11, wherein the shell body (114) comprises a bottom plate (1142) and a side plate (1143), the side plate (1143) surrounding an edge of the bottom plate (1142), and an end of the side plate (1143) away from the bottom plate (1142) is attached to the cover body (115) to cooperatively form the inner cavity (111).

13. The battery case (10) according to any one of claims 3 to 12, wherein the shell body (114) is further arranged with a liquid injection hole (15), the liquid injection hole (15) communicating with the interior of the shell (11).

14. A battery (100), comprising a battery cell (20) and the battery case (10) according to any one of claims 1 to 13, the battery cell (20) being accommodated within the inner cavity (111) of the battery case (10), and the two connecting pieces (12) of the battery case (10) being respectively electrically connected to a positive electrode (221) and a negative electrode (222) of the battery cell (20).

15. The battery (100) according to claim 14, wherein the battery case (10) further comprises a plurality of fixing members (16), the fixing members (16) being arranged on an outer edge of the shell (11).

16. A battery assembly, comprising a battery tray and the battery (100) according to claim 14 or 15, the battery being accommodated within the battery tray.

17. An electrical device, comprising the battery assembly according to claim 16.
